# EUROPÄISCHE PATENTSCHRIFT

(11) **EP 3 576 892 B1**
(45) Veröffentlichungstag und Bekanntmachung des Hinweises auf die Patenterteilung: **07.04.2021**
(21) Anmeldenummer: 18705558.7
(22) Anmeldetag: 02.02.2018
(51) Int. Cl.: B21D 37/14, B23Q 3/155, B23Q 13/00, B25H 3/02

(54) **WERKZEUGKASSETTE**
TOOL HOLDER
CASSETTE D'OUTIL

(30) Priorität: 03.02.2017 DE 102017201787
(43) Veröffentlichungstag der Anmeldung: 11.12.2019
(73) Patentinhaber: TRUMPF Schweiz AG, 7214 Grüsch (CH)
(72) Erfinder: KERSCHER, Stefan, 75045 Walzbachtal (DE); LARDON, Etienne, 6333 Huenenberg See (CH); NUSSBAUM, Dario, 8406 Winterthur (CH); TWEITMANN, Mathias, 8820 Waedenswil (CH)
(74) Vertreter: Prüfer & Partner mbB Patentanwälte · Rechtsanwälte
(86) Internationale Anmeldenummer: PCT/EP2018/052638
(87) Internationale Veröffentlichungsnummer: WO 2018/141900

(56) Entgegenhaltungen:
- EP-A1- 2 529 854
- US-A1- 2007 191 199
- US-B1- 7 159 712

## Beschreibung

Die Erfindung betrifft eine Werkzeugkassette, insbesondere eine Werkzeugkassette zum lösbaren Halten eines Bearbeitungswerkzeugs für eine Bearbeitungsmaschine für Bleche.

Üblicherweise haben Werkzeugkassetten für Bearbeitungswerkzeuge einen Tragegriff, durch den es möglich ist, eine Werkzeugkassette ergonomisch zu tragen. Der Griff ist so gestaltet, dass mit einer Hand nur eine Werkzeugkassette getragen werden kann. Zum Rüsten einer Bearbeitungsmaschine ist es aber günstig, wenn gleichzeitig mehrere Werkzeugkassetten zu der Maschine getragen werden können, um sie in ein Werkzeugmagazin der Bearbeitungsmaschine einzusetzen. Aus diesem Grund werden oft mehrere Werkzeugkassetten an ihren Griffen mit jeweils einzelnen Fingern getragen, wodurch es aufgrund des Gewichts der Bearbeitungswerkzeuge zu großen Belastungen der einzelnen Finger kommt. Dies ist für einen Maschinenbediener unangenehm und birgt ein Verletzungsrisiko.

Eine solche Werkzeugkassette ist beispielsweise im Dokument EP 2 529 854 A1 offenbart.

Das US-Patent US 7 159 712 B1 offenbart einen Werkzeugkoffer, der aus einem Grundkörper, in den Bearbeitungswerkzeuge aufgenommen werden können, und Anbaugehäusen, in denen ebenfalls Bearbeitungswerkzeuge aufgenommen werden können, besteht. Die Anbaugehäuse können mit dem Grundkörper formschlüssig und lösbar verbunden werden.

Der Erfindung liegt die Aufgabe zugrunde, die obigen Probleme zu lösen und eine Werkzeugkassette bereitzustellen, die es ermöglicht, gleichzeitig mehrere Werkzeugkassetten ergonomisch zu tragen.

Die Aufgabe wird durch ein Set aus einer Werkzeugkassette und einer weiteren Werkzeugkassette gemäß Anspruch 1 gelöst. Weiterentwicklungen der Erfindung sind Gegenstand der abhängigen Ansprüche.

Gemäß einem Aspekt der Erfindung wird eine Werkzeugkassette bereitgestellt, die eine erste Verbindungseinrichtung, die dazu angepasst ist, mit einer zweiten zu der ersten Verbindungseinrichtung komplementären Verbindungseinrichtung einer weiteren Werkzeugkassette formschlüssig und lösbar verbindbar zu sein, aufweist.

Durch das Vorsehen einer ersten Verbindungseinrichtung an einer Werkzeugkassette, wobei die erste Verbindungseinrichtung mit einer zweiten, zu der ersten Verbindungseinrichtung komplementären, Verbindungseinrichtung, verbindbar ist, lässt sich eine weitere Werkzeugkassette mit der ersten Werkzeugkassette verbinden und somit können sowohl die erste als auch die weitere Werkzeugkassette über die erste Werkzeugkassette getragen werden.

Da die erste Verbindungseinrichtung hakenförmig ausgebildet ist und die zweite Verbindungseinrichtung als Hakenaufnahme ausgebildet ist, können die erste Werkzeugkassette und die weitere Werkzeugkassette sehr einfach miteinander verbunden werden.

Durch eine vorteilhafte Ausbildung der Hakenaufnahme als eine Öffnung an einer Oberfläche der weiteren Werkzeugkassette, wobei die Öffnung eine Hinterschneidung für die hakenförmig-ausgebildete erste Verbindungseinrichtung aufweist, kann ein Gegenstück für die hakenförmige Verbindungseinrichtung auf einfache Weise ausgebildet werden, ohne einen zusätzlichen Bauraum zu beanspruchen.

Wenn die erste Verbindung vorteilhafterweise mit einer Anlagefläche versehen ist, an der die Oberfläche der weiteren Werkzeugkassette anliegt und sich daran abstützt, haben die erste und die weitere Werkzeugkassette eine stabile Verbindung, die nicht einfach unabsichtlich ausgehängt werden kann.

Bei einem vorteilhaften Bereitstellen der Werkzeugkassette mit einem Handgriff können sowohl die erste als auch die weitere Werkzeugkassette bzw. die weiteren Werkzeugkassetten ergonomisch getragen werden.

Bei einem Vorsehen eines Kassettengrundkörpers der Werkzeugkassette aus Kunststoff können vorteilhafterweise sowohl die erste als auch die zweite Verbindungseinrichtung einfach in den Grundkörper integriert werden und weiterhin stellt eine Verwendung von Kunststoff einen Kassettengrundkörper mit geringem Gewicht bereit.

Vorteilhafterweise sind die Werkzeugkassetten sowohl mit der ersten als auch mit der zweiten Verbindungseinrichtung versehen, so dass die Werkzeugkassetten beliebig verbunden werden können.

Durch ein, bezüglich einer Vorderseite mit einer Werkzeughalterung und einer gegenüberliegenden Rückseite, seitliches Anordnen von einer der Verbindungseinrichtungen und einem Anordnen der anderen von den Verbindungseinrichtungen an der Rückseite, können die erste und die weitere Werkzeugkassette kompakt miteinander verbunden werden, ohne dass gehaltene Bearbeitungswerkzeuge kollidieren.

Sofern eine der Verbindungseinrichtungen beiderseits seitlich angeordnet ist, ist es möglich, mehrere Werkzeugkassetten als nur die eine erste und die eine weitere Werkzeugkassette miteinander zu verbinden.

Durch ein Vorsehen eines Sets von Werkzeugkassetten, insbesondere eines Sets von identischen Werkzeugkassetten, besteht die Möglichkeit, ein flexibles Wechselkonzept für Bearbeitungswerkzeuge zu realisieren, da auch mehrere verschiedene Bearbeitungswerkzeuge einfach zu der Maschine gebracht werden können.

Die Erfindung wird nun anhand eines Ausführungsbeispiels unter Bezugnahme auf die beigefügten Zeichnungen erläutert.

Insbesondere zeigen:
- Fig. 1: eine perspektivische Ansicht einer Werkzeugkassette von schräg vorne;
- Fig. 2: eine perspektivische Ansicht der Werkzeugkassette von schräg hinten;
- Fig. 3: eine Schnittdarstellung von miteinander verbundenen Werkzeugkassetten, und
- Fig. 4: eine Draufsicht auf drei miteinander verbundene Werkzeugkassetten.

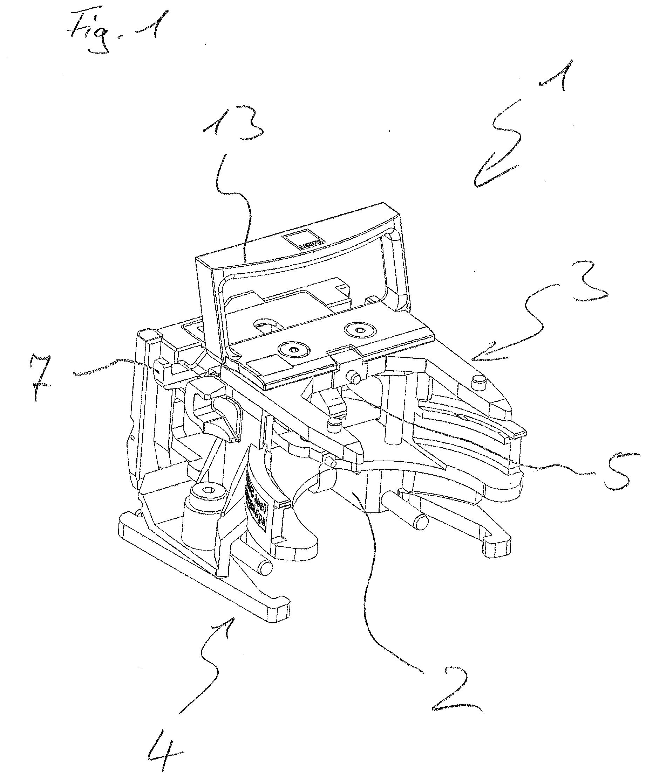

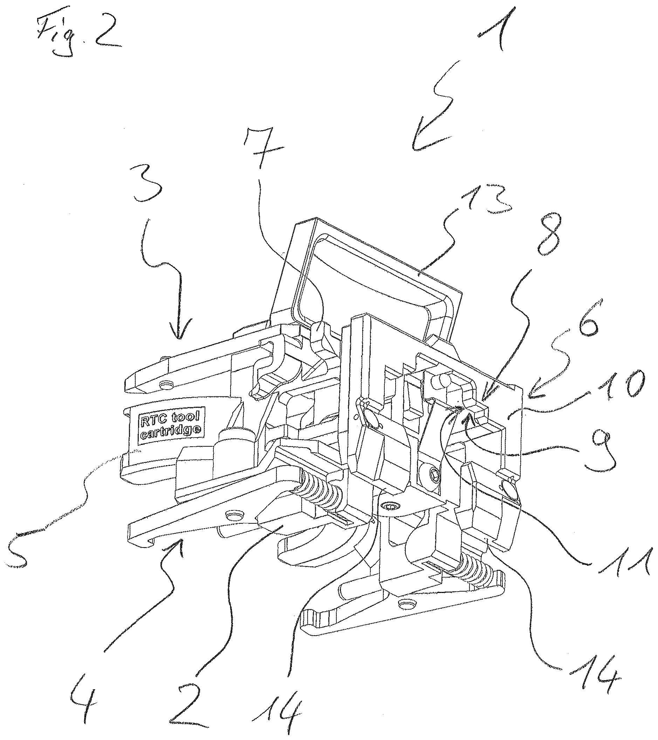

Fig. 1 zeigt eine perspektivische Ansicht einer Werkzeugkassette 1 von schräg vorne und Fig. 2 zeigt eine perspektivische Ansicht der Werkzeugkassette 1 von schräg hinten.

Die Werkzeugkassette 1 dient zum Aufnehmen eines nicht gezeigten Bearbeitungswerkzeugs. Die Werkzeugkassette 1 weist einen Kassettengrundkörper 2 auf. Der Kassettengrundkörper 2 ist aus Kunststoff, beispielsweise aus faserverstärktem Polyamid, hergestellt. Alternativ kann der Kassettengrundkörper auch aus einem anderen Material, insbesondere Aluminium oder einer Magnesiumlegierung, hergestellt sein. Der Kassettengrundkörper kann alternativ auch nur teilweise aus Kunststoff oder nur teilweise aus Aluminium oder der Magnesiumlegierung hergestellt sein.

An dem Kassettengrundkörper 2 ist auf einer Vorderseite eine Werkzeughalterung zum lösbaren Halten des Bearbeitungswerkzeugs, welches zum Bearbeiten von plattenförmigen Werkstücken geeignet ist, vorgesehen. Die Werkzeughalterung besteht aus einer Stempelhalterung 3 zum lösbaren Halten eines als Bearbeitungsstempel ausgebildeten Werkzeugteils des Bearbeitungswerkzeugs und einer Matrizenhalterung 4 zum lösbaren Halten eines als Bearbeitungsmatrize ausgebildeten Werkzeugteils des Bearbeitungswerkzeugs. Ferner ist auf der Vorderseite noch eine optionale Halterung 5 für einen Abstreifer des Bearbeitungswerkzeugs vorgesehen.

Auf einer Rückseite der Werkzeugkassette 1, einer Seite, die der Vorderseite gegenüberliegt, ist eine Befestigungsvorrichtung 6 (Fig. 2) zum Befestigen der Werkzeugkassette 1 in einem Werkzeugmagazin einer nicht gezeigten Bearbeitungsmaschine vorgesehen.

Die Werkzeugkassette ist ferner mit einer ersten Verbindungseinrichtung 7, die hakenförmig ausgebildet ist, versehen.

In dieser Ausführungsform ist an der Werkzeugkassette 1 auch eine zweite Verbindungseinrichtung 8 (Fig. 2) vorgesehen. Die zweite Verbindungseinrichtung 8 ist komplementär zu der ersten Verbindungseinrichtung 7 und in dieser Ausführungsform als eine Hakenaufnahme ausgebildet. Die erste Verbindungseinrichtung 7 und die zweite Verbindungseinrichtung 8 sind formschlüssig und lösbar verbindbar.

In dieser Ausführungsform sind sowohl die erste Verbindungseinrichtung 7 als auch die zweite Verbindungseinrichtung 8 an der Werkzeugkassette 1 vorgesehen. Alternativ kann auch eine der Werkzeugkassetten 1 wahlweise nur die erste Verbindungseinrichtung 7 oder nur die zweite Verbindungseinrichtung 8 aufweisen und die andere der Verbindungseinrichtungen ist an einer weiteren Werkzeugkassette 1' vorgesehen.

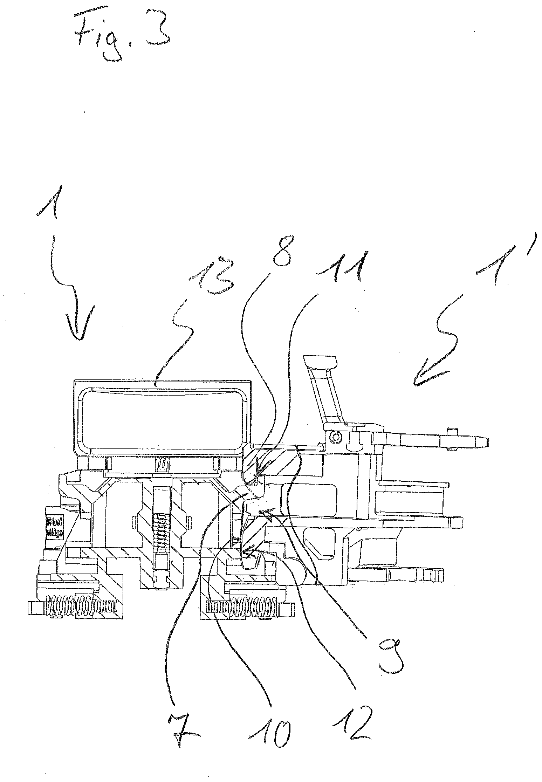

In Fig. 3 ist eine Schnittdarstellung von miteinander verbundenen Werkzeugkassetten, nämlich der Werkzeugkassette 1 und der weiteren Werkzeugkassette 1' gezeigt.

Wie in Fig. 2 und Fig. 3 zu sehen, weist die zweite Verbindungseinrichtung 8 eine Öffnung 9 an einer Oberfläche 10 der Werkzeugkassette 1 auf und die Öffnung 9 weist eine Hinterschneidung 11 auf. In die Hinterschneidung 11 greift die hakenförmige erste Verbindungseinrichtung 7 ein, um die Werkzeugkassette 1 und die weitere Werkzeugkassette 1' zu verbinden.

Die erste Verbindungeinrichtung 7 ist ferner mit einer Anlagefläche 12 versehen. Die Anlagefläche 12 ist so ausgebildet, dass die zweite Verbindungseinrichtung 8 mit der Oberfläche 10 der weiteren Werkzeugkassette 1' in einem eingehängten Zustand an der Anlagefläche 12 anliegt und sich daran abstützt. Des Weiteren sind am Kassettengrundkörper 2 weitere Anlageflächen 14 in einem Winkel von 90° zu den Auflageflächen 12 so angeordnet, dass in einem Zustand, in dem die weitere Werkzeugkassette 1' in die Werkzeugkassette 1 eingehängt ist, die weitere Werkzeugkassette 1' durch diese Anlageflächen 14 zusätzlich abgestützt wird. Auf diese Weise sind die beiden Werkzeugkassetten (1,1') bewegungsfrei miteinander verbunden und jede der Werkzeugkassetten (1,1') nimmt gegenüber einer jeweils anderen Werkzeugkassette (1, 1') eine definierte Position ein. Alternativ können eine unterschiedliche Anzahl von Anlageflächen 14 vorgesehen.

Wie in den Figuren zu sehen ist, weist die Werkzeugkassette 1 optional einen Handgriff 13 auf. Der Handgriff 13 dient zum Tragen der Werkzeugkassette 1 und gegebenenfalls der mit der Werkzeugkassette 1 verbundenen weiteren Werkzeugkassetten 1'.

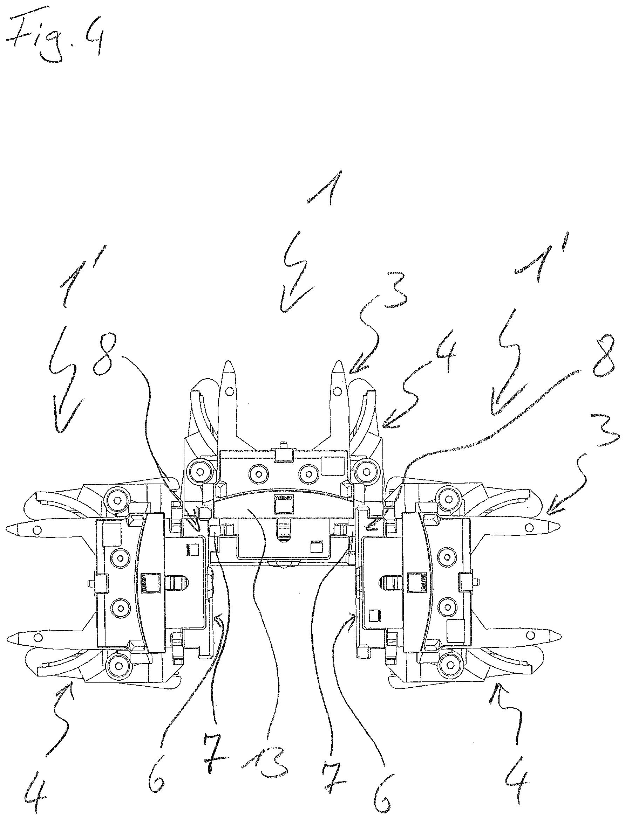

Fig. 4 zeigt eine Draufsicht auf drei miteinander verbundene Werkzeugkassetten, nämlich der Werkzeugkassette 1 und der weiteren Werkzeugkassetten 1'. Auch in dieser Figur sind die Seiten

der Werkzeugkassetten 1, 1', an denen jeweils die Werkzeughalterung in Form der Stempelhalterung 3 und der Matrizenhalterung 4 angeordnet sind, als die Vorderseite definiert und die gegenüberliegende Seite, an der jeweils die Befestigungseinrichtung 6 zum Befestigen der Werkzeugkassetten 1, 1' in dem Werkzeugmagazin angeordnet ist, als die Rückseite definiert. Seiten, die sich horizontal zwischen der Vorder- und der Rückseite befinden, sind als seitlich definiert. Seitlich an der Werkzeugkassette 1 sind also, wie in Fig. 4 gezeigt, an beiden Seiten die erste Verbindungseinrichtungen 6 angeordnet. Die erste Verbindungseinrichtung 6 kann alternativ auch seitlich an der Werkzeugkassette 1 nur an einer Seite angeordnet sein. Die zweite Verbindungseinrichtung 8 ist an der Rückseite der weiteren Werkzeugkassetten 1' angeordnet gezeigt.

Die Werkzeugkassette 1 und die weiteren Werkzeugkassetten 1' bilden ein Set aus mehreren Werkzeugkassetten 1, 1'. Die hier gezeigten Werkzeugkassetten 1, 1' weisen jeweils eine identische Anordnung der ersten Verbindungseinrichtungen 7 und der zweiten Verbindungseinrichtungen 8 auf. Alternativ kann die Anordnung bzw. das Vorsehen der Verbindungseinrichtungen 7, 8 auch unterschiedlich sein.

## Patentansprüche

1. Set aus einer Werkzeugkassette (1) und einer weiteren Werkzeugkassette (1') zum Aufnehmen eines Bearbeitungswerkzeugs, wobei die Werkzeugkassette (1) und die weitere Werkzeugkassette (1') jeweils
einen Kassettengrundkörper (2) und eine Werkzeughalterung zum lösbaren Halten des Bearbeitungswerkzeugs, und
die Werkzeugkassette (1) mindestens eine erste Verbindungseinrichtung (7) aufweist, die dazu angepasst ist, mit einer zweiten zu der ersten Verbindungseinrichtung (7) komplementären Verbindungseinrichtung (8) der weiteren Werkzeugkassette (1') formschlüssig und lösbar verbindbar zu sein,
**dadurch gekennzeichnet, dass**
die erste Verbindungseinrichtung (7) hakenförmig ausgebildet ist und die zweite Verbindungseinrichtung (8) als Hakenaufnahme ausgebildet ist.

2. Set gemäß Anspruch 1, wobei die zweite Verbindungseinrichtung (8) eine Öffnung (9) an einer Oberfläche (10) der weiteren Werkzeugkassette (1') aufweist und die Öffnung (9) eine Hinterschneidung (11) für die hakenförmig-ausgebildete erste Verbindungseinrichtung (7) aufweist.

3. Set gemäß Anspruch 2, wobei die erste Verbindungseinrichtung (7) mit einer Anlagefläche (12) versehen ist, die so ausgebildet ist, dass die Oberfläche (10) der Werkzeugkassette (1) mit der zweiten Verbindungseinrichtung (8) in einem eingehängten Zustand von zwei Werkzeugkassetten (1, 1') an der Anlagefläche (12) anliegt und sich daran abstützt.

4. Set gemäß Anspruch 3, wobei der Kassettengrundkörper (2) mit mindestens einer weiteren Anlagefläche (14) versehen ist, die so angeordnet ist, dass der Kassettengrundkörper der weiteren Werkzeugkassette (1') in einem eingehängten Zustand von zwei Werkzeugkassetten (1, 1') an dieser Anlagefläche (14) anliegt und sich daran abstützt.

5. Set gemäß einem der vorangehenden Ansprüche, wobei die Werkzeugkassette (1) einen Handgriff (13) zum Tragen der Werkzeugkassette (1) aufweist.

6. Set gemäß einem der vorangehenden Ansprüche, wobei der Kassettengrundkörper (2) aus Kunststoff hergestellt ist.

7. Set gemäß einem der vorangehenden Ansprüche, wobei die Werkzeugkassette (1) sowohl mindestens eine der ersten Verbindungseinrichtungen (7) als auch mindestens eine der zweiten Verbindungseinrichtungen (8) aufweist.

8. Set gemäß Anspruch 7, wobei
eine Seite der Werkzeugkassette (1), an der die Werkzeughalterung angeordnet ist, als Vorderseite definiert ist,
eine zu der Vorderseite gegenüberliegende Seite als Rückseite definiert ist, und
Seiten horizontal zwischen der Vorderseite und der Rückseite als seitlich definiert sind, wobei
die erste Verbindungseinrichtung (7) oder die zweite Verbindungseinrichtung (8) an einer der Werkzeugkassetten (1) seitlich angeordnet ist, und
die andere von der ersten Verbindungseinrichtung (7) und der zweiten Verbindungseinrichtung (8) an der weiteren Werkzeugkassette (1') an der Rückseite angeordnet ist.

9. Set gemäß Anspruch 8, wobei die erste Verbindungseinrichtung (7) oder die zweite Verbindungseinrichtung (8) jeweils an beiden seitlichen Seiten angeordnet ist.

10. Set gemäß einem der vorangehenden Ansprüche, wobei die Werkzeugkassetten (1, 1') eine identisch Anordnung der ersten Verbindungseinrichtungen (7) und zweiten Verbindungseinrichtungen (8) aufweisen.

## Claims

1. Set of a tool cartridge (1) and of a further tool cartridge (1') for accommodating a processing tool, wherein the tool cartridge (1) and the further tool cartridge (1') respectively comprise
a cartridge base body (2) and a tool holder for detachably holding the processing tool, and
the tool cartridge (1) comprises at least one first coupling device (7) configured such that it can be coupled in a form-fit and detachable manner to a second coupling device (8) of a further tool cartridge (1'), the second coupling device (8) being complementary to the first coupling device (7)
**characterized in that**
the first coupling device (7) is formed hook-shaped and the second coupling device (8) is configured as a hook receiver.

2. Set according to claim 1, wherein the second coupling device (8) comprises an orifice (9) in a surface (10) of the further tool cartridge (1') and the orifice (9) comprises an undercut (11) for the first coupling device (7) formed in a hook-shaped manner.

3. Set according to claim 2, wherein the first coupling device (7) is provided with a contact face (12) configured such that, in a hooked-in state of two tool cartridges (1, 1'), the surface (10) of the tool cartridge (1) having the second coupling device (8) abuts to and supports oneself against the contact surface (12).

4. Set according to claim 3, wherein the cartridge base body (2) is provided with at least one further contact surface (14) arranged such that, in a hooked-in state of two tool cartridges (1,1'), the cartridge base body of the further tool cartridge (1') abuts to and supports oneself against this contact face (14).

5. Set according to anyone of the preceding claims, wherein the tool cartridge (1) comprises a handle (13) for carrying the tool cartridge (1).

6. Set according to anyone of the preceding claims, wherein the cartridge base body (2) is made of plastic.

7. Set according to anyone of the preceding claims, wherein the tool cartridge (1) comprises at least one of the first coupling devices (7) as well as at least one of the second coupling devices (8).

8. Set according to claim 7, wherein
a face of the tool cartridge (1) on which the tool holder is arranged is defined as front side,
a face opposite to the front side is defined as rear side, and
faces being horizontally between the front side and the rear side are defined as lateral, wherein
the first coupling device (7) or the second coupling device (8) is arranged laterally on one of the tool cartridges (1), and
the other one of the first coupling device (7) and the second coupling device (8) is arranged on another one of the tool cartridges (1') on the rear side.

9. Set according to claim 8, where the first coupling device (7) or the second coupling device (8) is respectively arranged on both lateral faces.

10. Set according to anyone or the preceding claims, wherein the tool cartridges (1, 1) comprise an identical arrangement of the first coupling devices (7) and the second coupling devices (8).

## Revendications

1. Ensemble composé d'une cassette d'outil (1) et d'une autre cassette d'outil (1') pour loger un outil d'usinage, dans lequel la cassette d'outil (1) et l'autre cassette d'outil (1') présentent respectivement
un corps de base de cassette (2) et une fixation d'outil pour maintenir de manière amovible l'outil d'usinage, et
la cassette d'outil (1) présente au moins un premier dispositif de liaison (7) qui est adapté pour pouvoir être relié par complémentarité de forme et de manière amovible à un deuxième dispositif de liaison (8), complémentaire du premier dispositif de liaison (7), de l'autre cassette d'outil (1'),
**caractérisé en ce que**
le premier dispositif de liaison (7) est réalisé en forme de crochet et le deuxième dispositif de liaison (8) est réalisé en tant que logement de crochet.

2. Ensemble selon la revendication 1, dans lequel le deuxième dispositif de liaison (8) présente une ouverture (9) sur une surface (10) de l'autre cassette d'outil (1') et l'ouverture (9) présente une contre-dépouille (11) pour le premier dispositif de liaison (7) réalisé en forme de crochet.

3. Ensemble selon la revendication 2, dans lequel le premier dispositif de liaison (7) est pourvu d'une surface d'appui (12) qui est réalisée de telle sorte que la surface (10) de la cassette d'outil (1) repose avec le deuxième dispositif de liaison (8), dans un état accroché de deux cassettes d'outil (1, 1'), sur la surface d'appui (12) et prend appui sur celle-ci.

4. Ensemble selon la revendication 3, dans lequel le corps de base de cassette (2) est pourvu d'au moins une autre surface d'appui (14) qui est disposée de telle sorte que le corps de base de cassette de l'autre cassette d'outil (1') repose, dans un état accroché de deux cassettes d'outil (1, 1'), sur ladite surface d'appui (14) et prend appui sur celle-ci.

5. Ensemble selon l'une quelconque des revendications précédentes, dans lequel la cassette d'outil (1) présente une poignée (13) pour porter la cassette d'outil (1).

6. Ensemble selon l'une quelconque des revendications précédentes, dans lequel le corps de base de cassette (2) est fabriqué à partir de matière plastique.

7. Ensemble selon l'une quelconque des revendications précédentes, dans lequel la cassette d'outil (1) présente à la fois au moins un des premiers dispositifs de liaison (7) et au moins un des deuxièmes dispositifs de liaison (8).

8. Ensemble selon la revendication 7, dans lequel
un côté de la cassette d'outils (1), sur lequel la fixation d'outil est disposée, est défini en tant que côté avant,
un côté faisant face au côté avant est défini en tant que côté arrière, et
des côtés à l'horizontale entre le côté avant et le côté arrière sont définis en tant que latéraux, dans lequel
le premier dispositif de liaison (7) ou le deuxième dispositif de liaison (8) est disposé de manière latérale sur une des cassettes d'outil (1), et
l'autre parmi le premier dispositif de liaison (7) et le deuxième dispositif de liaison (8) est disposé sur le côté arrière sur l'autre cassette d'outil (1').

9. Ensemble selon la revendication 8, dans lequel le premier dispositif de liaison (7) ou le deuxième dispositif de liaison (8) est disposé respectivement sur les deux côtés latéraux.

10. Ensemble selon l'une quelconque des revendications précédentes, dans lequel les cassettes d'outil (1, 1') présentent un agencement identique des premiers dispositifs de liaison (7) et des deuxièmes dispositifs de liaison (8).
